# EUROPEAN PATENT SPECIFICATION

(11) **EP 0 726 414 B1**
(45) Date of publication and mention of the grant of the patent: **29.03.2000**
(21) Application number: 96300753.9
(22) Date of filing: 02.02.1996
(51) Int. Cl.: F16K 47/02, F16K 47/08

(54) **Fluid flow control device**
Durchflussregelvorrichtung
Dispositif de réglage du débit

(30) Priority: 08.02.1995 GB 9502445
(43) Date of publication of application: 14.08.1996
(73) Proprietor: CONTROL COMPONENTS INC., Rancho Santa Margarita, CA 92688 (US)
(72) Inventor: Steinke, Joseph H., Mission Viejo, California 92691 (US)
(74) Representative: Sykes, John Christopher

(56) References cited:
- FR-A- 2 360 023
- US-A- 3 791 413
- US-A- 3 894 716
- US-A- 3 908 698

## Description

This invention relates to a fluid flow control device. It may be used to control the flow of liquids or gases and may, for example, be used to provide velocity control of high pressure flowing fluids. Such a device having the features defined in the preamble of claim 1 is known from document US-A-3 908 698. Other devices are sometimes known as variable fluid restrictor control valves, and are exemplified by Self US Patent Nos 3,451,404 and 3,514,074 which have frictional passageways, and by Self US Patent No 3,513,864 which has multiple abrupt, angular turn passageways.

In the handling of flowing high pressure fluids, it has been customary to utilise orifice means having a high velocity short throat section to attain energy losses or high pressure drops. If the fluid is in a liquid state and liable to flash, that is, vaporise or turn to a gaseous condition on the downstream side of the orifice or valve opening, it may condense implosively and induce damaging shock waves, cause erosion, and the like. Also, as the velocity of the fluid in the valve exceeds the velocity of the fluid in the line, several disturbing reactions occur. A most serious problem is rapid erosion of the valve surfaces by direct impingement of the liquid and any foreign particle suspended therein. Additional erosion results from cavitation. Cavitation may be defined as the high speed implosion of vapour against those internal parts of the valve controlling flow (the valve trim) and the valve body.

In addition to the severe problems resulting from erosion, the increased velocity also causes the flow characteristics of the valve to become unpredictable and erratic.

Other problems created by the high fluid velocity in the valve are severe noise generation, trim fatigue and possible degradation of flowing fluid materials such, for example, as polymers.

Fluid-borne noise downstream of control valves is often very high. If not treated or contained with the pipe, this noise can result in sound pressure levels of 110 to 170 dB about 0.9m (three feet) from the valve exit. Sound sources of this magnitude are hazardous to personnel and frequently result in complaints from local residents.

Mufflers and silencers can typically only attenuate fluid-borne noise 20 to 30 dB. Therefore, only partial success has been achieved with them in obtaining desired sound pressure levels.

Furthermore, a typical path treatment system ie, the muffler, lagging support structure etc is very cumbersome and expensive, often, the total cost of path treatment for noise can exceed the valve cost many times over.

In order to overcome or ameliorate the above problems, there have been introduced devices which effect energy losses in high pressure fluids without increasing velocity and shock wave reaction by sub-dividing the flow into a plurality of small, long passageways with abrupt turns creating friction and pressure drop in the fluid, thus avoiding damage and erosion in the equipment. Such a device is disclosed, for example, in US Patent No Re 32197. There, the passageways are provided in an annular stack of separate members having abutting faces enclosing a plurality of individual passageway grooves which are angular between the inlet and outlet of the stack to turn the fluid and to provide a substantially longer flow length than between the inlet and outlet ends of the stack. The stack is mounted in the fluid passage of a valve housing and a valve plug movable within the annular structure controls the number of passageways in the stack through which the fluid can flow.

A modified device of this type is disclosed in GB-A-2,273,579 in which at least one passageway in the stack of members of discs includes a void between the inlet and outlet region of the disc, the void expanding the cross-sectional area of the energy loss passageway.

Valves incorporating a flow control device including a stack of energy-loss passageways have become very successful commercially and it is an object of the present invention to provide an improvement in devices of this type.

Accordingly the invention provides a fluid flow control device comprising a plug and a cylinder, the cylinder being annular and the plug being cylindrical and moveable axially within said cylinder,
a fluid inlet co-operating with one end of said cylinder,
a fluid outlet co-operating with the other end of said cylinder,
a fluid flow path extending axially through the device and having a path entry of variable area, said fluid flow path having a plurality of circumferentially extending angular turns, and
operating means for axially moving the plug relative to the cylinder,
the arrangement being such that as the plug is moved axially the length of the fluid flow path is varied, characterised in that the cylinder comprises an outer annulus and an inner annular sleeve and the fluid flow path lies between the inner annular sleeve and the outer annulus.

Conveniently, as the plug moves further out of the cylinder, a corresponding increase in fluid flow is obtained.

Thus the axial flow paths with turns may be provided as passageways formed as channels in a sleeve forming an inner wall of the annular cylinder. The passageways communicate at a plurality of discrete openings, or radially directed passageways, along their length with the interior of the sleeve and a plug fits within the sleeve. An inlet is provided at or adjacent one end of the cylinder to communicate with the interior of the sleeve. When the plug is fully within the sleeve, flow to an outlet at or adjacent the opposite end of the cylinder to the inlet is closed off. As the plug is moved out of the cylinder and its sleeve, fluid flow through the device commences once the plug has exposed the first radially directed passageway. This radially directed passageway is preferably at or adjacent the end of the axial passageway close to the inlet so that fluid flows along the majority and possibly the whole of the length of the axial passageway with turns. As the plug moves further out of the cylinder sleeve, it exposes one or more further of such radially directed communication openings and hence flow through the device increases but the increased flow travels along a shorter length of the axial passageway and hence through fewer turns.

The cross-section of the axial passageways with turns may increase in the direction from inlet to outlet.

The cylinder and its sleeve are preferably tapered to ensure a good sealing fit and the taper is preferably from the inlet to the outlet end.

The cylinder and its sleeve may, if desired, be joined together, eg by brazing.

There is preferably a plurality of the axial passageways with turns provided through the sleeve. For example, there may be from 2 to 12 such passageways, preferably from 4 to 8.

The axial passageways may be equi-spaced around the sleeve but, in certain circumstances, it may be found advantageous to stagger them axially. By this means the multiple passageways forming parallel flows can be arranged to provide a uniform Cv vs stroke and to minimise dead zones.

Devices of the invention are particularly suitable for use in circumstances of variable pressure drop.

Devices of the invention are also particularly useful for, although not limited to, application with valves of relatively small or intermediate capacity, eg of Cv's from 1 to 50.

They provide advantages of:
i) requiring fewer components than conventional multistage flow control devices;
ii) larger flow passages can be provided on smaller valves;
iii) the axial flow distributes the pressure drop along the length of the device; and
iv) the components may be made from stellites, carbides and a variety of other materials as they are relatively easy to machine e.g. by electro discharge milling.

Embodiments of the invention will now be described by way of example only with reference to the accompanying drawings in which:
Figure 1 is a perspective view of a cylinder and its sleeve which form part of one embodiment of the invention;
Figure 2 is a section on line IV-IV of Figure 1;
Figure 3 is a view in the direction of arrow A of Figure 2;
Figure 4 is a diagrammatic representation of the flow paths through a device according to the invention; and
Figure 5 is a perspective view of a template used to make the flow passageways in the sleeve of Figure 2.

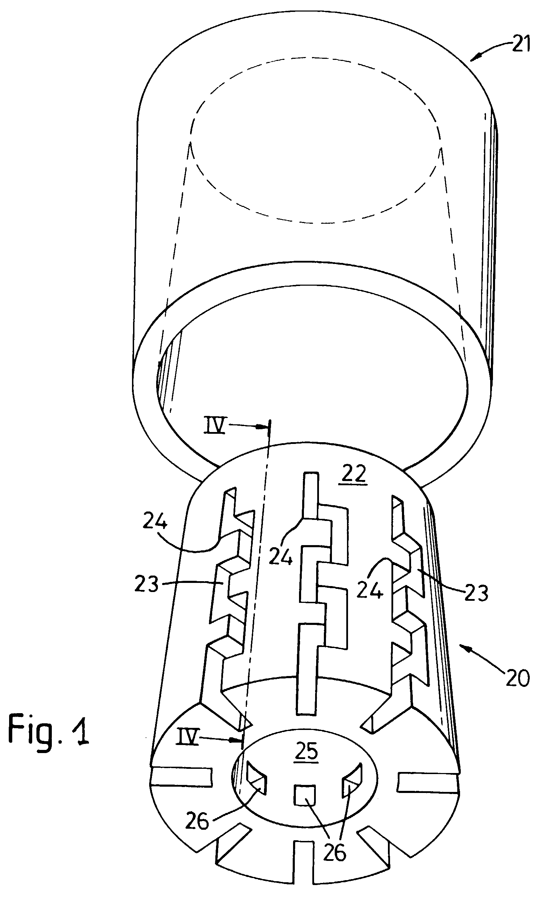

An embodiment of the invention is shown in Figures 1 to 3.

In this embodiment the throttling, or flow resistance, is provided by passageways in an annular sleeve 20 which fits into the cylinder through which the plug is moveable.

The outer diameter of annular sleeve 20 decreases along the axial length of the sleeve, such that the sleeve has a smaller outer diameter at its end closest to the fluid inlet. The sleeve taper is matched by the internal taper of the external solid cylinder 21 into which sleeve 20 is fitted in fluid-tight manner. The inner diameter of sleeve 20 is constant, providing an interior bore 25 through which a cylindrical plug can move.

The outer surface 22 of sleeve 20 is provided with a series of axially-extending passageways 23, each passageway having a number of circumferentially extending (i.e. extending in a direction substantially at right angles to a radius of sleeve 20) right-angled turns 24. Each passageway 23 communicates with the interior bore 25 of the inner annulus via a plurality of axially-spaced and radially directed openings 26 extending through the thickness of the sleeve.

To open flow, the plug is lifted and moved out of the sleeve 20 sufficiently to expose the uppermost opening 26 in each passageway 23. Fluid can then flow the entire length of each passageway 23 to the outlet and hence negotiates all the right angle turns. As the plug is moved further out of the sleeve 20, successive openings 26 along each passageway are exposed so that flow increases but the flow through each successive opening then negotiates fewer turns along each passageway 23. The area of path entry available for fluid flow is thus varied as the plug is moved axially.

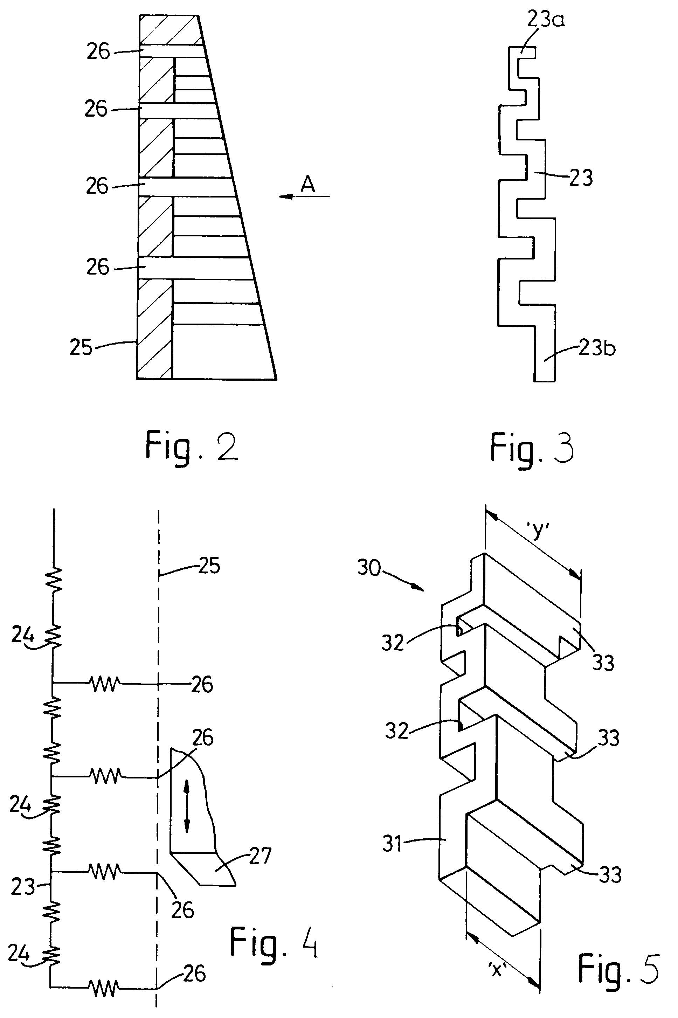

Moreover, as shown in Figure 3, each passageway 23 increases in cross-section from its inlet end 23a to its outlet end 23b, thereby further increasing flow as the plug moves further out of the sleeve 20. The radially directed openings or passageways 26 towards the outlet end of the device may also have a greater cross-sectional area than those towards the inlet end.

This is illustrated diagrammatically in terms of flow resistance in Figure 4 where plug 27 exposes more or less openings 26 leading to turns 24 in passageway 23 as it is moved up or down.

Figure 5 shows a template 30 with which a passageway 23 with turns 24 can be cut, e.g. electro-discharge milled, into the outer surface of sleeve 20 while also cutting the openings 26 through the wall thickness of the annulus.

The template has an elongated body 31, shaped to correspond to passageways 23, with right-angled turns 32 corresponding to turns 24. It is of depth "x" corresponding to the desired depth of passageway 23 (so that "x" may vary along the length of the body 31, if desired) and has extensions 33 corresponding to the desired communication openings 26 in sleeve 20. The depth "y" of body 31, including an extension 33, is equal to the wall thickness of sleeve 20.

## Claims

1. A fluid flow control device comprising a plug (27) and a cylinder (20, 21), the cylinder (20, 21) being annular and the plug (27) being cylindrical and moveable axially within said cylinder (20, 21),
a fluid inlet co-operating with one end of said cylinder (20, 21),
a fluid outlet co-operating with the other end of said cylinder (20, 21),
a fluid flow path (23) extending axially through the device and having a path entry of variable area, said fluid flow path (23) having a plurality of circumferentially extending angular turns (24), and
operating means being provided for axially moving the plug relative to the cylinder (20, 21),
the arrangement being such that as the plug is moved axially the length of the fluid flow path (23) is varied, characterised in that the cylinder comprises an outer annulus (21) and an inner annular sleeve (20) and the fluid flow path (23) lies between the inner annular sleeve (20) and the outer annulus (21).

2. A fluid flow control device as claimed in Claim 1 characterised in that the area of path entry (26) available for fluid flow is varied as the plug is moved axially further out of the cylinder (20, 21).

3. A fluid flow control device as claimed in Claim 1 characterised in that the fluid flow path (23) comprises a plurality of passageways.

4. A fluid flow control device as claimed in Claim 3 characterised in that at least one of the passageways comprising the fluid flow path (23) has a plurality of substantially right-angled turns (24).

5. A fluid flow control device as claimed in Claim 2 characterised in that the fluid flow path (23) has an increasing cross-sectional area as it extends axially through the plug and cylinder (20, 21) arrangement.

6. A fluid flow control device as claimed in any preceding claim characterised in that the fluid flow path (23) includes radially directed passageways (26) which extend through the inner surface of the sleeve (20) to connect with passageways (23)which extend axially within the sleeve (20).

7. A fluid flow control device as claimed in any preceding claim characterised in that the outer wall of the sleeve (20) and the inner wall of the cylinder (20, 21) are tapered.

8. A fluid flow control device as claimed in any preceding claim characterised in that the cylindrical plug (27) is substantially solid.

9. A fluid flow control device as claimed in any preceding claim characterised in that it includes closure means associated with the plug (27) and cylinder (20, 21) to enable fluid flow through the device to be stopped off.

## Patentansprüche

1. Flüssigkeitsflußregler bestehend aus einem Stopfen (27) und einem Zylinder (20, 21), wobei der Zylinder (20, 21) rund und der Stopfen (27) zylindrisch und axial im genannten Zylinder (20, 21) bewegbar ist,
einem Flüssigkeitseinlaß der mit einem Ende des genannten Zylinders (20, 21) zusammenwirkt, einem Flüssigkeitsauslaß, der mit dem anderen Ende des genannten Zylinders (20, 21) zusammenwirkt,
einem Flüssigkeitsflußweg (23), der axial durch die Vorrichtung verläuft und
einen Wegeingang mit variabler Fläche aufweist, wobei der genannte Flüssigkeitsflußweg (23) mehrere, um den Umfang verlaufende, winklige Abbiegungen (24) aufweist und
einer Bedienvorrichtung zur axialen Bewegung des Stopfens in Bezug zum Zylinder (20, 21),
wobei in dieser Vorrichtung bei axialer Bewegung des Stopfens, die Länge des Flüssigkeitsflußwegs (23) verändert wird, dadurch gekennzeichnet, daß der Zylinder einen äußeren Kreisring (21) aufweist und eine innere kreisförmige Hülse (20) und sich der Flüssigkeitsflußweg (23) zwischen der inneren kreisförmigen Hülse (20) und dem äußeren Kreisring (21) befindet.

2. Flüssigkeitsflußregler gemäß Anspruch 1, dadurch gekennzeichnet, daß sich die Fläche des Wegeingangs (26), die zum Fluß der Flüssigkeit zur Verfügung steht, ändert wenn der Stopfen axial weiter aus dem Zylinder (20, 21) bewegt wird.

3. Flüssigkeitsflußregler gemäß Anspruch 1, dadurch gekennzeichnet, daß der Flüssigkeitsflußweg (23) mehrere Durchführungen aufweist.

4. Flüssigkeitsflußregler gemäß Anspruch 3, dadurch gekennzeichnet, daß mindestens eine der Durchführungen, die den Flüssigkeitsflußweg (23) aufweist, mehrere im wesentlichen rechtwinklige Abbiegungen (24) enthält.

5. Flüssigkeitsflußregler gemäß Anspruch 2, dadurch gekennzeichnet, daß die Querschnittsfläche des Flüssigkeitsflußwegs (23) im Laufe des Verlaufs durch den Stopfen und Zylinder (20, 21) zunimmt.

6. Flüssigkeitsregler gemäß jedem der vorstehenden Ansprüche, dadurch gekennzeichnet, daß der Flüssigkeitsflußweg (23) radial auslaufende Durchführungen (26) aufweist, die durch die Innenfläche der Hülse (20) verlaufen und eine Verbindung zu den Durchführungen (23) schaffen, die axial in der Hülse (20) verlaufen.

7. Flüssigkeitsregler gemäß jedem der vorstehenden Ansprüche, dadurch gekennzeichnet, daß die Außenwand der Hülse (20) und die Innenwand des Zylinders (20, 21) kegelig verjüngt sind.

8. Flüssigkeitsregler gemäß jedem der vorstehenden Ansprüche, dadurch gekennzeichnet, daß der zylindrische Stopfen (27) im wesentlichen massiv ist.

9. Flüssigkeitsregler gemäß jedem der vorstehenden Ansprüche, dadurch gekennzeichnet, daß der Regler einen zum Stopfen (27) und Zylinder (20, 21) zugehörigen Verschluß aufweist, damit der Flüssigkeitsfluß durch den Regler abgesperrt werden kann.

## Revendications

1. Un dispositif de contrôle de débit de fluide comprenant un bouchon (27) et un cylindre (20, 21), le cylindre (20, 21) étant annulaire et le bouchon (27) étant cylindrique et mobile axialement dans ledit cylindre (20, 21)
une entrée de fluide coopérant avec une extrémité dudit cylindre (20, 21)
une sortie de fluide coopérant avec l'autre extrémité dudit cylindre (20, 21)
un passage de débit de fluide (23) s'étendant axialement à travers le dispositif et ayant une entrée de passage d'une surface variable, ledit passage de débit de fluide (23) ayant une pluralité de tournants angulaires s'étendant circonférenciellement (24), et
un moyen d'actionnement fourni pour déplacer axialement le bouchon par rapport au cylindre (20, 21)
l'arrangement étant tel qu'au fur et à mesure que le bouchon est déplacé axialement, la longueur du passage de débit de fluide (23) est variée, caractérisé en ce que le cylindre comprend un anneau extérieur (21) et une chemise annulaire intérieure (20) et en ce que le passage de débit de fluide (23) se trouve entre la chemise annulaire intérieure (20) et l'anneau extérieur (21).

2. Un dispositif de contrôle de débit de fluide comme revendiqué dans la revendication 1 caractérisé en ce que la surface de l'entrée de passage (26) disponible pour le débit de fluide est variée au fur et à mesure que le bouchon est sorti du cylindre (20, 21) par déplacement axial.

3. Un dispositif de contrôle de débit de fluide comme revendiqué dans la revendication 1 caractérisé en ce que le passage de débit de fluide (23) comprend une pluralité de canaux de passage.

4. Un dispositif de contrôle de débit de fluide comme revendiqué dans la revendication 3 caractérisé en ce qu'au moins un des canaux de passage comprenant le passage de débit de fluide (23) a une pluralité de tournants substantiellement à angle droit (24) .

5. Un dispositif de contrôle de débit de fluide comme revendiqué dans la revendication 2 caractérisé en ce que le passage de débit de fluide (23) a une section qui augmente au fur et à mesure qu'il s'étend axialement à travers l'arrangement bouchon et cylindre (20, 21).

6. Un dispositif de contrôle de débit de fluide comme revendiqué dans toute revendication précédente caractérisé en ce que le passage de débit de fluide (23) comporte des canaux de passage dirigés radialement (26) qui s'étendent à travers la surface intérieure de la chemise (20) pour se connecter avec des canaux de passage (23) qui s'étendent axialement dans la chemise (20).

7. Un dispositif de contrôle de débit de fluide comme revendiqué dans toute revendication précédente caractérisé en ce que la paroi extérieure de la chemise (20) et la paroi intérieure du cylindre (20, 21) sont coniques.

8. Un dispositif de contrôle de débit de fluide comme revendiqué dans toute revendication précédente caractérisé en ce que le bouchon cylindrique (27) est substantiellement plein.

9. Un dispositif de contrôle de débit de fluide comme revendiqué dans toute revendication précédente caractérisé en ce qu'il comporte un moyen de fermeture associé au bouchon (27) et au cylindre (20, 21) pour permettre d'arrêter le débit de fluide à travers le dispositif.
